# EUROPEAN PATENT SPECIFICATION

(11) **EP 3 054 453 B1**
(45) Date of publication and mention of the grant of the patent: **06.05.2020**
(21) Application number: 14846822.6
(22) Date of filing: 19.03.2014
(51) Int. Cl.: G21C 1/03, G21C 17/022, G21C 13/08, C23C 22/72, C23C 22/73, G21C 15/247, G21C 21/00

(54) **METHOD FOR THE IN SITU PASSIVATION OF THE STEEL SURFACES OF A NUCLEAR REACTOR**
VERFAHREN ZUR IN-SITU-PASSIVIERUNG DER STAHLFLÄCHEN EINES KERNREAKTORS
PROCÉDÉ DE PASSIVATION INTRA-CIRCUIT DES PAROIS D'ACIER D'UN RÉACTEUR NUCLÉAIRE

(30) Priority: 30.09.2013 RU 2013143712
(43) Date of publication of application: 10.08.2016
(73) Proprietor: Joint Stock Company "Akme-Engineering", Moscow 115035 (RU)
(72) Inventor: MARTYNOV, Petr Nikiforovich, g. Obninsk Kaluzhskaya obl. 249030 (RU); ASKHADULLIN, Radomir Shamilievich, g. Obninsk Kaluzhskaya obl. 249030 (RU); IVANOV, Konstantin Dmitrievich, g. Obninsk Kaluzhskaya obl. 249030 (RU); LEGKIH, Aleksandr Urievich, g. Obninsk Kaluzhskaya obl. 249030 (RU); STOROZHENKO, Aleksey Nikolaevich, g. Obninsk Kaluzhskaya obl. 249034 (RU); FILIN, Aleksandr Ivanovich, Moscow 107065 (RU); BULAVKIN, Sergey Viktorovich, Moscow 127410 (RU); SHARIKPULOV, Said Mirfaisovich, Moskovskaya obl. 143083 (RU); BOROVITSKY, Stepan Artemovich, Moscow 121069 (RU)
(74) Representative: Mitev, Mitko Karushkov
(86) International application number: PCT/RU2014/000171
(87) International publication number: WO 2015/047131

(56) References cited:
- JP-A- 2003 185 787
- RU-C1- 2 456 686
- RU-C1- 2 456 686
- US-A1- 2009 252 883
- US-A1- 2009 252 883
- US-A1- 2012 230 459
- US-A1- 2012 230 459

## Description

### Field of the invention

The invention relates to nuclear engineering, in particular, to the method of in-line passivation of nuclear reactor steel surfaces with heavy liquid-metal coolant.

### Related art

Different methods of steel tubes surfaces passivation are currently in use.

For example, a method passivation of internal surfaces of boiler tubes and a power generation unit are currently in use, the method is based on the passivation performed by means of a gaseous oxidizer (oxygen), which is introduced to the operating medium during the boiler kindling at the shut-down turbine with the system of iron-oxides carryover from the duct monitoring. The operating medium is continuously transferred to the condition of water-steam mixture from the very beginning of the boiler kindling by means of reducing the medium pressure and temperature. Heat release in the boiler furnace is increased gradually, the next step of heat release starts when iron-oxides carryover at this step of cleaning stops. Introduction of oxidizer is carried out starting when the pressure level in the boiler superheater zone reaches 1.0-1.2 MPa, when pressure in the boiler superheater zone reaches 2.0-3.0 MPa and iron-oxides carryover at this step is stopped, the boiler operating medium pressure and temperature is increased till the parameters that correspond to removing of the operating medium in the boiler superheater zone from the steam-water condition, and this mode is maintained till the end of passivation process (the RF patent RU 2232937, F22B37/48, July 20, 2004).

A method of steel tubes passivation by means of their treatment with oxygen-containing agent is currently in use; according to this invention air with addition of oxygen or nitrogen to concentration no more than 1.2 g/l is used as an oxygen-containing agent, the treatment is performed in 0.5-50.0 minutes with the agent flow rate 50-200 m/s and 300-500 m/s (the RF patent RU 2190699, C23G5/00, October 10, 2002). This method is intended for corrosion protection of steel tubes of different diameter and length, to which heightened requirements on effective protection from corrosion are applied, especially to their hardly accessible internal surface. This method is intended for enterprises that produce steel tubes for industry.

A method of oxygen cleaning and passivation of steel tubes internal surfaces by means of a cleaning agent is also currently in use; the agent represents a mixture of oxygen with feed water or steam or steam-water mixture, the concentration of oxygen in the cleaning agent is maintained within 10-15 g/kg, and cleaning is performed during 4.5-5 hours at temperature of the cleaning agent 90-450 °C (the RF patent RU 2303745, F22B37/48, July 27, 2007). As mentioned in the description of the invention, this method ensures effective cleaning and passivation of the tubes internal surfaces, while decreasing power consumption and downtime of the power generation equipment.

Still, this method is intended for passivation of tubes internal surfaces by means of flowing of a mixture of oxygen with feed water or steam or steam-water mixture through the tubes. This method is not appropriate for passivation of nuclear plant steel elements, as the operating conditions, including temperature modes, and the materials used in these devices are essentially different. Besides, the reliability requirements to nuclear reactors operation are much higher than the requirements for boiler equipment.

In particular, the following technologies are used to ensure corrosion resistance of construction steels in the first circuit of nuclear reactors with heavy liquid-metal coolant:
- chemical or electrochemical treatment of a fuel element surface;
   non-circuit (factory) passivation (preliminary oxidizing) of separate elements and units in oxidizing media, for example, in alloy for the core elements, in carbon dioxide for steam generators, in water steam for the control and protection system housings;
- discarding of fuel elements with steel claddings subsequent to the results of monitoring of thickness and quality of an oxide layer preliminarily formed on the fuel elements surface.

As a rule, these operations are performed at the enterprise that produces elements for the first circuit of a nuclear reactor.

Preliminary preparation and passivation of major surfaces of the first circuit, as it is described in patent RU2190699, can result in significant decrease of integral consumption of dissolved oxygen by steels, thus facilitating the operation of oil exchange devices and other means of maintaining oxygen potential of coolant, especially at the initial stage of a nuclear reactor operation.

However, during implementation of non-circuit (factory) passivation significant technical disadvantages were found out, they mainly concern the mode of preliminary non-circuit oxidation of fuel elements with claddings made of ferritic-martensitic-type steel ER in open tank by lead-bismuth eutectics. Non-circuit passivation (oxidizing) of components in gaseous environment (CO₂, water steam) made factory technologies more complicated. Still, it is necessary to mention that at the stage of factory passivation the operation of discarding the finished components was performed that appeared to be rather effective in accordance with the results of the plants operation. The percentage of faulty production was ∼ 10 % and higher after two steps of discarding (after preliminary modes of steel treatment and after factory passivation). Special modes of treatment in carbon dioxide at increased temperatures were used for non-circuit passivation of steam generators made of perlitic steels, these modes were combined with welding seams annealing mode.

It should be mentioned that the choice of temperature and oxygen modes of factory passivation is not optimum, as oxidic films including plumboferrite phases without protective properties are formed at steel surfaces during such treatment.

Experience has shown that preliminary treatment of steel surfaces of the first circuit of a fast neutron nuclear reactor with heavy liquid-metal coolant cannot, according to the reasons stated above, guarantee sufficient level of passivation when oxidizing processes at these surfaces are minimized during interaction of the first circuit with liquid metal coolant (for example, lead, lead-bismuth eutectics).

Therefore, intra-circuit passivation of steel constructions is usually provided for fast neutron reactors in addition to factory (non-circuit) treatment, it is usually performed at the initial stage of a nuclear reactor operation. JP2003 185787 discloses a protective film for liquid-metal-cooled nuclear reactor inner surfaces by controlling the dissolved oxygen concentration.

The closest prior art of this invention is a technical solution that refers to intra-circuit passivation of structures of fast neutron reactors equipped with means of corrosion protection of fuel elements and the first circuit elements that come in contact with liquid-metal (lead) coolant (the RF patent RU2456686, G21C 1/03, July 20, 2012).

As mentioned in patent RU2456686, if lead coolant is used, problems with corrosion of structural elements of the reactor first circuit can appear. The invention in accordance with RU2456686 is aimed to suppress corrosion of structural elements of the reactor first circuit, first of all, structural elements installed in the reactor core, due to formation of stable passive carbide films. Besides, the invention ensures the protection fuel elements' anticorrosion claddings and protective coatings that are formed at the first circuit structural elements from mechanic damages. Solution of these objectives is attributed to the fact that fuel elements claddings located in the hardest operating conditions, namely in the hot spot area, that come in contact with lead coolant in high temperature section of the reactor first circuit are mostly corrodible. So called dynamic corrosion is also of vital importance, this corrosion appears and grows due to coolant circulation between the first circuit sections with different temperatures. In order to ensure corrosion protection of fuel elements and the first circuit elements of a fast neutron reactor with liquid-metal (lead) coolant, a passivation additive was introduced to coolant; carbon was used as this additive. When fuel elements protective cladding is made of vanadium or niobium (or their alloy), interaction of liquid-metal coolant (lead-carbon alloy) with the fuel element protective cladding material, it results in carbonization of the upper layer of the cladding. As a result passive carbide coating is formed on the surface of the protective cladding.

Application of this method is limited, as it supposes using fuel elements containing not only a leak proof housing but also a protective cladding made of vanadium or niobium or an alloy based on vanadium or niobium, and lead is used as a coolant. The closest prior art is intended to create a carbide foam, in general, on the surface of fuel elements protective cladding, while passivation of the remaining elements of a nuclear reactor first circuit (pumps, surfaces of steam generator, etc.) is likely to be performed less intensively (nothing is said in the description that the material of those elements contains vanadium, niobium or an alloy based on those metals).

### Summary of the invention

Objective of the invention is to ensure reliable intra-circuit passivation of steel surfaces of the elements of the first circuit of a nuclear reactor with heavy liquid-metal coolant by means of creation of conditions that facilitate oxidizing process that ensures the required level of passivation at the beginning of the nuclear reactor operation.

Taking into account the available physical constraints of the known methods regarding possible intensity of oxygen introduction to coolant, the situation, when oxygen consumption for oxidizing reactions is higher than the rate of its introduction to heavy liquid-metal coolant, is possible, it means that it is impossible to maintain the required oxygen mode of the mentioned coolant. The initial stage of the reactor operation is the most difficult in this case. The situation is complicated by the fact that the initial step of oxide films formation on steel surfaces immersed to heavy liquid-metal coolant cannot be correctly calculated presently. That is why errors in the estimation of initial steel oxidizing rates are great; it is hard to correlate them with possibilities of heavy liquid-metal coolant technology.

Solution of these objectives allows keeping the integrity of passivation film on the surface of steel elements during subsequent operation of a nuclear reactor by means of using organic oil exchange equipment used in the nuclear reactor.

The technology of intra-circuit passivation using a core emulator allows obtaining the following technical results:
- to ensure corrosion resistance of steel examples with no preliminary special preparation for operation in heavy liquid-metal coolant medium;
- to reduce minimum rate of oxygen consumption during initial period of a nuclear reactor operation, the consumption reduces so far as the surface of the first circuit oxidizes;
- to reduce dissolved oxygen productivity of technological means of oxygen introduction to coolant that supports the necessary oxygen mode at the initial stage of the nuclear reactor operation.

As fuel elements can be preliminarily passivated, oxygen consumption for their oxidizing can be additionally reduced.

The following essential features of the method for intra-circuit passivation of a nuclear reactor steel surfaces influence reaching the above mentioned technical results.

The method of intra-circuit passivation of a nuclear reactor steel surfaces is distinguished by that protection film is formed on the surface of the first circuit elements of a nuclear reactor by means of introduction of a substance to coolant that interacts with the material of the first circuit elements of a nuclear reactor with formation of protection film; during a nuclear reactor installation a core emulator is installed to the place of the core until the reactor first circuit is filled with coolant, the reactor is filled with coolant, the coolant is heated to the temperature that ensure passivation conditions, after that the core emulator is removed and the nuclear core is installed to its place.

The liquid-metal coolant is used as coolant of the first circuit.

The intra-circuit passivation is performed in two steps, the first step is performed in the isothermal passivation mode when oxygen is introduced to liquid-metal coolant, and the second step is performed in the non-isothermal passivation mode.

The isothermal passivation mode is performed at temperature T= 300 °C-330 °C.

The oxygen with thermodynamic activity a = 10⁻¹ - 10⁻³ is introduced to liquid-metal coolant.

The thermodynamic activity of oxygen a = 10⁻¹ - 10⁻³ and the temperature T = 300-330 °C is maintained during 220 (±20) hours.

The non-isothermal passivation mode is performed when a pump or pumps are switched on.

The pump or pumps power is equal to 30 % or more from the nominal power.

The concentration of oxygen is maintained at the level of CO₂ = (1 -4)^{∗} 10⁻⁶ % wt.

The thermodynamic activity of oxygen is increased to *a* = 10⁻² +10⁻⁴.

The pump or pumps power equal to 30 % or more from the nominal power, oxygen concentration at the level of CO₂ = (1 -4)^{∗} 10⁻⁶ % wt. and oxygen thermodynamic activity a = 10⁻² - 10⁻⁴ are kept during t = 550 (±50) hours.

Core emulator represents a core model that imitates its shape, relative position of the core elements and mass and dimensional characteristics.

As in RU 2456686 prototype, protective film is formed on the surface of the elements of the reactor first circuit in order to perform intra-circuit passivation of steel surfaces of the first circuit of fast neutron reactor by means of introduction of a substance interacting with material of the elements of the reactor first circuit and creating a protective film to heavy liquid-metal coolant of the reactor first circuit.

The difference of the claimed method is that during a nuclear reactor installation a core emulator is installed to the place of the core until the reactor first circuit is filled with coolant, the core emulator represents a core model that imitates its shape, relative position of the core elements (including fuel assemblies) and their mass characteristics.

Then the reactor is filled with coolant, the coolant is heated to the temperature that ensure passivation conditions.

Intra-circuit passivation is performed in two steps, the first step includes isothermal passivation performed at temperature T = 300 - 330 °C with pumps switched off and increased oxygen thermodynamic activity a = 10⁻¹ - 10⁻³, this temperature and activity are kept during t = 220±20 hours; the second step involves non-isothermal passivation with pumps switched on with power equal to 30 % or more from the nominal power during t = 550 (±50) hours, the concentration of oxygen is maintained at the level of CO ₂ = (1-4)^{∗} 10⁻⁶ % wt. with increased oxygen thermodynamic activity a = 10⁻² - 10⁻⁴, after that the core emulator is removed and the organic core is installed to its place, coolant temperature increases from T= 300-330 °C to the level required for passivation (T= 410-420 °C).

Later on the attained concentration of oxygen is maintained in the liquid-metal coolant provided that the reactor operates in routine mode.

Use of full-sided core emulator during hot trial mode, that provides modeling of flowover of all elements of the reactor first circuit, allows increasing corrosion resistance of construction steels in the first circuit with heavy liquid metal coolant by means of oxidizing of steels in heavy liquid-metal coolant medium and reduce the required oxygen concentration in routine mode of oxygen concentration not less than (CO₂ = (1 -10)^{∗} 10⁻⁶ % wt.)

Preliminary (non-circuit, for example, factory) passivation of such elements of the fuel circuits as the core and steam generators allows reducing oxygen consumption approximately by 50 % during routine operation, and the maximum effect is reached during steam generators passivation (∼ 30 %) as they have larger surface area that comes in contact with liquid-metal coolant. A significant advantage of the claimed method is that thin, hard, (corrosion) protective oxidic films are formed provided that the above mentioned operation modes are obeyed. In accordance with the results of the investigations, forming of 1-2 µm film at the initial stage of a nuclear reactor operation is enough to significantly decrease the intensity of oxidizing interaction of steels with coolant in routine (operation) mode.

When the claimed method of damaging of oxide layer formed in the flow of heavy liquid-metal coolant was used during corrosion bench testing of with non-passivated samples of steels of the first circuit, no corrosive damages were found with the selected oxygen concentration, on the contrary, damages were "healed" and film of the required thickness, hardness and continuity of oxide level was formed.

Significant research efforts were made in order to ground the claimed method of intra-circuit passivation. In particular, as for the most critical components of the first circuit, the fuel elements (ferritic-martensitic-type steel ES-823), it was proved that preliminary oxidizing in the melt ensures reliable corrosion protection of all steel surface at increased temperatures (t = 620-650 °C), on the basis of 1000-5000 hours with fair statistics (scores of plants). The latter fact is an essential one as during the same investigations some pitting corrosion was found at witness samples made without any protection including preliminary oxidizing from time to time with statistical variability.

### Embodiment

With account of experimental data, the most appropriate mode is intra-circuit passivation at temperature 410-420 °C with increased oxygen concentration (CO₂ = 1^{∗} 10⁻⁵ % wt); it permits to combine passivation mode that lasts 2-4 weeks with other commissioning activities and it will not lead to unreasonable delay of the reactor plant startup.

Implementation of the technology of intra-circuit passivation of steel circuits using the core emulator of a fast neutron reactor with heavy liquid-metal coolant is performed in separate steps and provides obligatory accomplishment of the following technological operations:
- installation of the core emulator to the place of the reactor plant core;
- filling the reactor with heavy liquid metal coolant;
- heating of the coolant is heated to the temperature that ensures passivation conditions;
- intra-circuit passivation that includes isothermal passivation mode (T= 300-330 °C, t ∼ 220 hours) and non-isothermal passivation mode (the power of pumps should not be less than 30 % of the rated value during t ∼ 550 hours) at the increased oxygen thermodynamic activity (a = 10⁻¹ - 10⁻³ in isothermal mode and a = 10⁻² - 10⁻⁴ in non-isothermal mode).
- removal of the core emulator.

Later on, when the nuclear core is installed instead of the core emulator and when the reactor is operated in routine mode, the required oxygen concentration is maintained; it ensures continuous passivation of steel components that is performed at routine coolant temperature parameters but less intensively, when during implementation of the claimed method with the core emulator application.

## Claims

1. The method of intra-circuit passivation of a nuclear reactor steel surfaces wherein a protection film is formed on the surface of the first circuit elements of a nuclear reactor by means of introduction of a substance to coolant that interacts with the material of the first circuit elements of a nuclear reactor with formation of protection film; and which is charcaterized in that during a nuclear reactor installation a core emulator is installed to the place of the core until the reactor first circuit is filled with coolant, the reactor is filled with coolant, the coolant is heated to the temperature that ensure passivation conditions, after that the core emulator is removed and the nuclear core is installed to its place.

2. **The method in accordance with claim 1 characterized that liquid-metal coolant is used as coolant of the first circuit.**

3. The method **in accordance with claim 2 characterized that** intra-circuit passivation is performed in two steps, the first step is performed in the isothermal passivation mode when oxygen is introduced to liquid-metal coolant, and the second step is performed in the non-isothermal passivation mode.

4. The method **in accordance with claim 3 characterized that** the isothermal passivation mode is performed at temperature T= 300-330 °C.

5. The method **in accordance with claim** 3 **characterized that** oxygen with thermodynamic activity a = 10⁻¹ - 10⁻³ is introduced to liquid-metal coolant.

6. The method **in accordance with claim 5 characterized that** the thermodynamic activity of oxygen a = 10⁻¹ - 10⁻³ and the temperature T = 300-330 °C is maintained during 220 (±20) hours.

7. The method **in accordance with claim 3 characterized that** the non-isothermal passivation mode is performed with pump or pumps switched on.

8. The method **in accordance with claim 7 characterized that** the pump or pumps power is not less than 30 % from the nominal power.

9. The method **in accordance with claim 7 characterized that** oxygen concentration is maintained at the level of CO₂ = (1-4)^{∗} 10⁻⁶ % wt.

10. The method **in accordance with claim** 7 **characterized that** oxygen thermodynamic activity is increased to a = 10⁻² - 10⁻⁴.

11. The method **in accordance with claim 7 characterized that** the pump or pumps power equal to 30 % or more from the nominal power, oxygen concentration at the level of CO₂ = (1-4)^{∗} 10⁻⁶ % wt. and oxygen thermodynamic activity a = 10⁻² - 10⁻⁴ are kept during t= 550 (±50) hours.

12. The method **in accordance with claim 1 characterized that** a core emulator represents a core model that imitates its shape, relative position of the core elements and mass and dimensional characteristics.

## Patentansprüche

1. Das Verfahren der Innenkreislauf-Passivierung von Stahloberflächen eines Kernreaktors, **dadurch gekennzeichnet, dass** ein Schutzfilm auf der Oberfläche der ersten Kreislaufelemente eines Kernreaktors durch Einbringen einer Substanz in ein Kühlmittel gebildet wird, das mit dem Material der ersten Kreislaufelemente eines Kernreaktors unter Bildung eines Schutzfilms interagiert; und während der Installation eines Kernreaktors wird ein Kernemulator an der Stelle des Kerns installiert, bis der erste Reaktorkreislauf mit Kühlmittel gefüllt ist, der Reaktor mit Kühlmittel gefüllt ist, das Kühlmittel auf die Temperatur erwärmt ist, die Passivierungsbedingungen gewährleistet sind, danach wird der Kernemulator entfernt und der organische Kern an seinem Platz installiert.

2. **Das Verfahren nach Anspruch 1, dadurch gekennzeichnet, dass das Flüssigmetallkühlmittel als Kühlmittel verwendet wird.**

3. Das Verfahren **nach Anspruch 2, dadurch gekennzeichnet, dass** die Innenkreislauf-Passivierung in zwei Schritten durchgeführt wird, der erste Schritt wird im isothermen Passivierungsmodus durchgeführt, wenn Sauerstoff in das Flüssigmetallkühlmittel eingeführt wird, und der zweite Schritt wird in der nicht-isothermen Passivierungsmodus durchgeführt.

4. Das Verfahren **nach Anspruch 3, dadurch gekennzeichnet, dass** der isotherme Passivierungsmodus bei Temperatur T= 300-330 °C durchgeführt wird.

5. Das Verfahren **nach Anspruch 3, dadurch gekennzeichnet, dass** das Sauerstoff mit thermodynamischer Aktivität a = 10⁻¹ - 10⁻³ in das Flüssigmetallkühlmittel eingeführt wird.

6. Das Verfahren **nach Anspruch 5, dadurch gekennzeichnet, dass** die thermodynamische Aktivität von Sauerstoff a = 10⁻¹ - 10⁻³ und die Temperatur T = 300-330 °C während 220 (±20) Stunden aufrechterhalten wird.

7. Das Verfahren **nach Anspruch 3, dadurch gekennzeichnet, dass** der nicht-isotherme Passivierungsmodus mit eingeschalteter Pumpe oder Pumpen durchgeführt wird.

8. Das Verfahren **nach Anspruch 7, dadurch gekennzeichnet, dass** die Pumpenleistung nicht weniger als 30% von der Nennleistung beträgt.

9. Das Verfahren **nach Anspruch 7, dadurch gekennzeichnet, dass** die Sauerstoffkonzentration auf des Niveaus von CO₂ = (1-4)^{∗} 10⁻⁶ Gew .-% aufrechterhalten wird.

10. Das Verfahren **nach Anspruch 7, dadurch gekennzeichnet, dass** die thermodynamische Aktivität des Sauerstoffs auf dem Niveau von a 10⁻² - 10⁻⁴erhöht wird.

11. Das Verfahren **nach Anspruch 7, dadurch gekennzeichnet, dass** die Pumpenleistung 30 % oder mehr von der Nennleistung beträgt, die Sauerstoffkonzentration in Höhe von CO2- (1-4)^{∗} 10⁻⁶ Gew .-% und die thermodynamische Aktivität des Sauerstoffs a = 10⁻² - 10⁻⁴ während t= 550 (±50) Stunden aufrechterhalten werden.

12. Das Verfahren **nach Anspruch 1, dadurch gekennzeichnet, dass** ein Kernemulator ein Kernmodell darstellt, das seine Form, relative Position der Kernelemente und Masse- und Dimensionseigenschaften nachahmt.

## Revendications

1. Le procédé de passivation intra-circuit des surfaces en acier d'un réacteur nucléaire **se caractérise en ce qu'**une pellicule de protection se forme à la surface des éléments du circuit primaire du réacteur nucléaire moyennant l'introduction d'un réactif dans le caloporteur qui interagit avec le matériau des éléments du circuit primaire du réacteur nucléaire de manière à former une pellicule de protection; et lors de l'installation d'un réacteur nucléaire un émulateur de cœur est installé à l'endroit du cœur jusqu'à ce que le circuit primaire du réacteur est rempli du caloporteur, le réacteur est rempli du caloporteur, le caloporteur est chauffé à une température qui assure les conditions de passivation, après quoi l'émulateur de cœur est retiré et un cœur organique est installé à sa place.

2. **Le procédé selon la revendication 1 se caractérise en ce que le caloporteur en métal liquide est utilisé comme fluide caloporteur du circuit primaire.**

3. Le procédé **selon la revendication 2 se caractérise en ce que** la passivation intra-circuit est effectuée en deux étapes, la première étape est effectuée en conditions de mode de passivation isotherme où de l'oxygène est introduit dans le caloporteur en métal liquide, et la seconde étape est effectuée en conditions de mode de passivation non isotherme.

4. Le procédé **selon la revendication 3 se caractérise en ce que** le mode de passivation isotherme est effectué à une température de T= 300-330 °C.

5. Le procédé **selon la revendication 3 se caractérise en ce que** de l'oxygène à activité thermodynamique a = 10⁻¹ - 10⁻³ est introduit dans le caloporteur en métal liquide.

6. Le procédé **selon la revendication 5 se caractérise en ce que** l'activité thermodynamique de l'oxygène a = 10⁻¹ - 10⁻³ et la température T = 300-330 °C sont maintenues pendant 220 (±20) heures.

7. Le procédé **selon la revendication 3 se caractérise en ce que** le mode de passivation non isotherme est effectué avec la pompe ou les pompes mises en marche.

8. Le procédé **selon la revendication 7 se caractérise en ce que** la puissance de la pompe ou des pompes n'est pas inférieure à 30 % de la puissance nominale.

9. Le procédé **selon la revendication 7 se caractérise en ce que** la concentration en oxygène est maintenue à un niveau de C0₂ = (1-4)^{∗} 10⁻⁶ % wt.

10. Le procédé **selon la revendication 7 se caractérise en ce que** l'activité thermodynamique de l'oxygène est augmentée jusqu'à a = 10⁻² - 10⁻⁴.

11. Le procédé **selon la revendication 7 se caractérise en ce que** la puissance de la pompe ou des pompes égale ou supérieure à 30 % de la puissance nominale, la concentration en oxygène à un niveau de C0₂ = (1-4)^{∗} 10⁻⁶ % wt, ainsi que l'activité thermodynamique de l'oxygène a = 10⁻² - 10⁻⁴ sont maintenues pendant t= 550 (±50) heures.

12. Le procédé **selon la revendication 1 se caractérise en ce que** l'émulateur de cœur représente un modèle de cœur qui imite sa forme, la position relative des éléments du cœur, ainsi que leur masse et caractéristiques dimensionnelles.
